# EUROPEAN PATENT APPLICATION

(11) **EP 4 529 813 A1**
(43) Date of publication of application: **02.04.2025**
(21) Application number: 24202871.0
(22) Date of filing: 26.09.2024
(51) Int. Cl.: A47J 31/00, A47J 31/36, A47J 31/52

(54) **SYSTEM AND METHOD FOR CONTROLLING BEVERAGE BREWING**

(30) Priority: 27.09.2023 NL 2035901; 27.09.2023 EP 23200145
(71) Applicant: Versuni Holding B.V., 1082 MD Amsterdam (NL)
(72) Inventor: DE VRIES, Tim, 1082 MD Amsterdam (NL); SINNEMA, Anke Gerda, 1082 MD Amsterdam (NL)
(74) Representative: Vollering, Stefanus Franciscus Maria

(57) **Abstract**

Provided is a system (50), method and related computer program, for controlling a fluid displacement assembly (18) of a beverage brewing apparatus (10). A wetting volume of liquid (14), to be delivered to a brewing vessel (16) containing raw material (12), is obtained at least partly based on an amount of the raw material from which a beverage is to be prepared. The fluid displacement assembly is operated in a first mode to deliver the wetting volume of the liquid to the brewing vessel containing the raw material. The fluid displacement assembly is switched from operating in the first mode to operating in a second mode, subject, e.g. in response, to the wetting volume of the liquid having been delivered to the brewing vessel by operation of the fluid displacement assembly in the first mode. Fluid is displaced by the fluid displacement assembly being operated in the second mode but at a lower flow rate compared to when the fluid displacement assembly is operated in the first mode. Further provided is the beverage brewing apparatus including the system.

## Description

### FIELD OF THE INVENTION

The invention relates to a system and method for controlling a fluid displacement assembly of a beverage brewing apparatus, e.g. a beverage brewing apparatus in the form of a coffee machine.

The invention further relates to a beverage brewing apparatus comprising the system, the brewing vessel, and the fluid displacement assembly.

### BACKGROUND OF THE INVENTION

On the market there are several kinds of beverage brewing apparatuses, e.g. coffee machines, that include a brewing vessel for containing raw material, e.g. ground coffee, tea, cocoa, etc., and a fluid displacement assembly for delivering liquid, e.g. water. into the brewing vessel containing the raw material.

Beverage recipes can vary in terms of the temperature of the liquid, e.g. water, delivered into the brewing vessel. For example, so-called "brew over ice" coffee recipes tend to utilize lower temperature water than more conventional hot coffee recipes.

However, such a lower temperature of the liquid can risk compromising raw material extraction, particularly when relatively high flow rates of the liquid through the brewing vessel are used. For example, when brewing coffee using water at a temperature below 90°C, the raw material extraction can be suboptimal when relatively high flow rates are employed.

Extraction can nonetheless be improved by slowing down the brewing process. This extends the contact time during which the liquid is in contact with the raw material, giving more time for solids to be extracted.

Realizing an efficient and effective brewing protocol, particularly when lower temperature liquid is to be used for brewing the beverage, nonetheless remains a challenge.

### SUMMARY OF THE INVENTION

The invention is defined by the claims.

According to examples in accordance with a first aspect of the present disclosure, there is provided a method for controlling a fluid displacement assembly of a beverage brewing apparatus, the beverage brewing apparatus further comprising a brewing vessel for containing raw material, the method comprising: obtaining a wetting volume of liquid to be delivered to the brewing vessel containing the raw material, the wetting volume being obtained at least partly based on an amount of the raw material from which a beverage is to be prepared; controlling the fluid displacement assembly to operate in a first mode to deliver the wetting volume of the liquid to the brewing vessel containing the raw material; and controlling the fluid displacement assembly to switch from operating in the first mode to operating in a second mode, subject to the wetting volume of the liquid having been delivered to the brewing vessel by operation of the fluid displacement assembly in the first mode, wherein fluid is displaced by the fluid displacement assembly being operated in the second mode but at a lower flow rate compared to when the fluid displacement assembly is operated in the first mode.

Delivery of the wetting volume of the liquid into the brewing vessel containing the raw material can provide a (pre-)wetting function that facilitates extraction. Moreover, by the wetting volume being based, at least in part, on the amount of raw material from which the beverage is to be prepared, the raw material can be appropriately wetted.

Operation of the fluid displacement assembly in the first mode can also at least partially fill the brewing vessel with the wetting volume of the liquid.

Delivery of the wetting volume of the liquid to the brewing vessel can accordingly be regarded as a filling phase.

In some embodiments, outflow of the beverage from the brewing vessel is blocked, e.g. by an outflow restriction valve, at least when the fluid displacement assembly is being operated in the first mode.

Thus, the wetting volume of the liquid can be retained in the brewing vessel until the fluid displacement assembly is operated in a subsequent mode, e.g. the second mode.

More generally, the fluid displacement assembly delivers the wetting volume of the liquid to the brewing vessel containing the raw material at a higher flow rate when operating in the first mode, compared to the lower flow rate at which fluid is displaced by the fluid displacement assembly in the second mode.

This can provide relatively efficient (pre-)wetting of the raw material.

By lowering the flow rate at which fluid is displaced by the fluid displacement assembly in the second mode, a more controlled, prolonged extraction can take place after delivery of the wetting volume of the liquid. In the context of coffee brewing, this can be regarded as a blooming phase.

The fluid displacement assembly's operation in the second mode can assist effective extraction, even when the temperature of the liquid is lower than that used in conventional hot coffee recipes. In some embodiments, the temperature of the liquid being delivered to the brewing vessel is less than 75°C.

In such embodiments, the less than 75°C liquid may be particularly suitable for cold brewing of coffee. The fluid displacement assembly's operation in the second mode can assist effective extraction even when using liquid, e.g. water, whose temperature is less than 75°C.

In some embodiments, the temperature of the liquid being delivered to the brewing vessel is less than 95°C, for example less than 90°C.

Thus, the present disclosure also contemplates brewing using higher temperatures, since the enhanced extraction, e.g. in combination with the liquid's temperature being 90°C to 95°C, can assist in brewing a stronger beverage, such as a stronger espresso.

In some embodiments, an additional volume of the liquid is displaced, at the lower flow rate, by the fluid displacement assembly into the brewing vessel by the fluid displacement assembly being operated in the second mode. By the additional volume of the liquid being delivered to the brewing vessel containing the raw material at the lower flow rate, a more controlled, prolonged extraction can take place using the additional volume of the liquid.

Alternatively or in addition to the additional volume of the liquid being displaced into the brewing vessel, operation of the fluid displacement assembly in the second mode causes the fluid, displaced at the lower flow rate, to urge a piston against the raw material and the liquid received in the brewing vessel.

By the piston being urged in this manner by the fluid displaced at the lower flow rate, pressure on the raw material and the liquid received in the brewing vessel can be exerted in a more measured manner, thereby assisting to achieve a relatively controlled, prolonged extraction.

In non-limiting examples in which no additional liquid is delivered to the brewing vessel by operation of the fluid displacement assembly in the second mode, the wetting volume of the liquid delivered into the brewing vessel by operation of the fluid displacement assembly in the first mode may, for instance, correspond to the overall volume of the liquid used to brew the beverage.

In other non-limiting examples, the additional volume of the liquid may be delivered to the brewing vessel by operation of the fluid displacement assembly in the second mode, as well as the piston being urged, by the fluid displaced at the lower flow rate, against the raw material and the liquid received in the brewing vessel.

The wetting volume can be obtained in any suitable manner. In some embodiments, an indication of the amount of the raw material is received via a user interface, and the wetting volume of liquid is determined based on the amount of the raw material as indicated by the indication received from the user interface.

In some embodiments, the wetting volume of the liquid, in milliliters, is equal to the sum of a first value and a second value, with the first value being equal to a mass of the raw material from which the beverage is to be prepared, in grams, multiplied by a coefficient, and wherein the coefficient is between 0.1 and 0.75, and the second value is 0; or wherein the coefficient is between 0.1 and 0.25 and the second value is between 10 and 50.

The coefficient may be between 0.1 and 0.75, with the second value being 0, when the additional volume of the liquid is delivered into the brewing vessel by the fluid displacement assembly being operated in the second mode.

This has been found to provide particularly effective pre-wetting of the raw material, prior to the additional volume of liquid being delivered to the brewing vessel.

In some embodiments, the coefficient is between 0.25 and 0.75, for example about 0.6, with the second value being 0.

In other embodiments, the coefficient is between 0.1 and 0.25, for example about 0.15, with the second value being 0.

The coefficient may be between 0.1 and 0.25, for example about 0.15, with the second value being between 10 and 50, in embodiments in which the fluid displaced by the fluid displacement assembly operating in the second mode urges the piston against the raw material and the liquid received in the brewing vessel.

In some embodiments, the controlling the fluid displacement assembly to switch from operating in the first mode to operating in the second mode comprises interrupting a pumping operation of the fluid displacement assembly following delivery of the wetting volume of the liquid to the brewing vessel. Such an interruption of the pumping operation may signal the end of the first mode, upon completion of the delivery of the wetting volume of the liquid to the brewing vessel.

In some embodiments, the fluid displacement assembly is controlled to implement a continuous pumping operation, when operating in the first mode, to deliver the wetting volume of the liquid into the brewing vessel.

In such embodiments, the continuous pumping operation may be interrupted upon completion of the delivery of the wetting volume of the liquid to the brewing vessel.

In some embodiments, the operation of the fluid displacement assembly in the second mode comprises intermittently actuating a pump included in the fluid displacement assembly.

The fluid displacement assembly can have any suitable design. In some embodiments, the fluid displacement assembly comprises a pumping mechanism that includes a pumping member and a solenoid energizable to cause displacement of the pumping member, wherein operating the fluid displacement assembly comprises receiving an electrical signal from a power supply and driving the solenoid, using the electrical signal, to cause displacement of the pumping member. Such a pumping mechanism can provide an effective and relatively straightforwardly manufacturable way of implementing the method, since the electrical signal used to drive the solenoid can be readily adjusted, e.g. using software, to implement the switching from the first mode to the second mode.

In some embodiments, the operation of the fluid displacement assembly in the second mode comprises applying multi cycle control to the electrical signal so that the pumping mechanism is intermittently actuated. Multi cycle control can provide a convenient way to lower the flow rate at which fluid is displaced by the fluid displacement assembly when operated in the second mode compared to when operated in the first mode.

In some embodiments, the fluid displacement assembly is operated in the second mode for 5 to 400 seconds, preferably for 5 to 180 seconds. This duration of operation in the second mode has been found to provide effective extraction, particularly when the temperature of the liquid is less than 95°C, for example less than 90°C, such as less than 75°C.

In some embodiments, the method comprises controlling the fluid displacement assembly to switch from operating in the second mode to operating in a third mode, wherein operation of the fluid displacement assembly in the third mode comprises delivery of the liquid to the brewing vessel containing the raw material at a higher flow rate compared to the flow rate at which fluid is displaced by operation of the fluid displacement assembly in the second mode. Operation of the fluid displacement assembly in the third mode can be regarded as a dispensing phase.

Operation of the fluid displacement assembly in the third mode can add to the liquid already delivered to the brewing vessel, e.g. the wetting volume only or the wetting volume and the additional volume of the liquid, so that an overall volume of the beverage can be realized.

Outflow of the brewed beverage from the brewing vessel may, for example, be permitted when the fluid displacement assembly is being operated in the third mode.

In some embodiments, the fluid displacement assembly operating in the third mode delivers the liquid to the brewing vessel at the same flow rate as when the fluid displacement assembly is being operated in the first mode.

In some embodiments, the liquid is delivered to the brewing vessel containing the raw material subject to a pressure of the liquid reaching or exceeding a given pressure threshold. Thus, the liquid can only enter the brewing vessel when the pressure of the liquid is at or exceeds the given pressure threshold. This pressure requirement can facilitate extraction.

The given pressure threshold may, for example, be in the range of 3.5 to 6 bar.

In embodiments in which the fluid displacement assembly operating in the second mode causes fluid to urge the piston against the raw material and the liquid received in the brewing vessel, the fluid displacement assembly may be arranged so that the liquid urges the piston against the raw material and the liquid received in the brewing vessel when the pressure of the liquid is below the given pressure threshold, and allows the liquid to be delivered to the brewing vessel containing the raw material when the pressure of the liquid reaches or exceeds the given pressure threshold.

It is generally noted that the method may be a computer-implemented method.

According to examples in accordance with a second aspect of the present disclosure, there is provided a computer program comprising computer program code which is configured, when the computer program is run on one or more processors, to cause the one or more processors to implement the method of any of the embodiments described herein.

One or more non-transitory computer readable media may be provided, which non-transitory computer readable media have a computer program stored thereon, and the computer program comprises computer program code which is configured, when the computer program is run on one or more processors, to cause the one or more processors to implement the method of any of the embodiments described herein.

In some embodiments, the computer program may be included in an application, in other words an app, for running on a user device, such as a smartphone or tablet computer.

According to examples in accordance with a third aspect of the present disclosure, there is provided a system for controlling a fluid displacement assembly of a beverage brewing apparatus, the beverage brewing apparatus having a brewing vessel for containing raw material, the system comprising a controller configured to: obtain a wetting volume of liquid to be delivered to the brewing vessel containing the raw material, the wetting volume being obtained at least partly based on an amount of the raw material from which a beverage is to be prepared; control the fluid displacement assembly to operate in a first mode to deliver the wetting volume of the liquid to the brewing vessel containing the raw material; and control the fluid displacement assembly to switch from operating in the first mode to operating in a second mode, subject to the wetting volume of the liquid having been delivered to the brewing vessel by operation of the fluid displacement assembly in the first mode, wherein fluid is displaced by the fluid displacement assembly being operated in the second mode but at a lower flow rate compared to when the fluid displacement assembly is operated in the first mode.

The controller may implement the method according to any of the embodiments described herein in relation to the first aspect.

According to examples in accordance with a fourth aspect of the present disclosure, there is provided a beverage brewing apparatus comprising: a brewing vessel for containing raw material; a fluid displacement assembly for delivering liquid into the brewing vessel containing the raw material; and the system according to any of the embodiments described herein.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 provides a block diagram of a beverage brewing apparatus according to an example;
FIG. 2 provides a graph that illustrates multi cycle control over a pumping mechanism included in a fluid displacement assembly; and
FIG. 3 provides a flowchart of a method for controlling a fluid displacement assembly of a beverage brewing apparatus according to an example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a system, method and related computer program, for controlling a fluid displacement assembly of a beverage brewing apparatus. A wetting volume of liquid, to be delivered to a brewing vessel containing raw material, is obtained at least partly based on an amount of the raw material from which a beverage is to be prepared. The fluid displacement assembly is operated in a first mode to deliver the wetting volume of the liquid to the brewing vessel containing the raw material. The fluid displacement assembly is switched from operating in the first mode to operating in a second mode, subject, e.g. in response, to the wetting volume of the liquid having been delivered to the brewing vessel by operation of the fluid displacement assembly in the first mode. Fluid is displaced by the fluid displacement assembly being operated in the second mode but at a lower flow rate compared to when the fluid displacement assembly is operated in the first mode.

Further provided is a beverage brewing apparatus including the fluid displacement assembly, the brewing vessel, and the system.

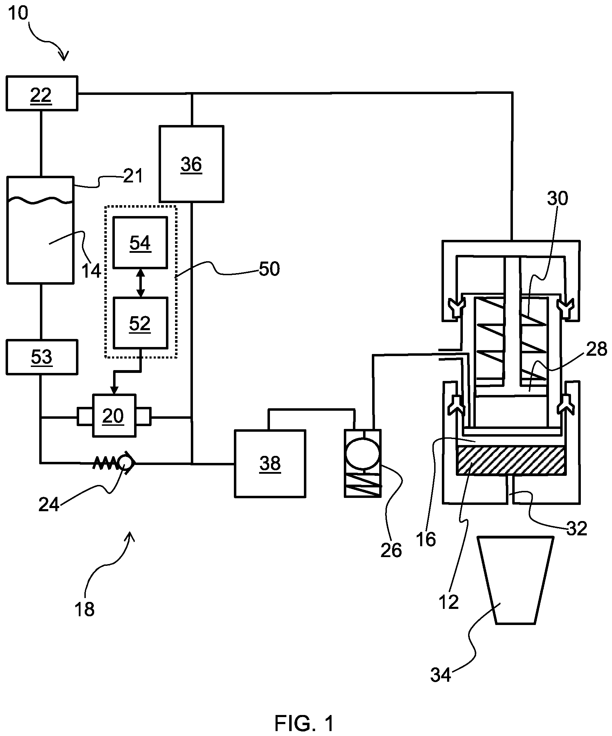

FIG. 1 schematically depicts a beverage brewing apparatus 10 for brewing a beverage by combining raw material 12 and a liquid 14, e.g. water, in a brewing vessel 16 of the beverage brewing apparatus 10. The brewing vessel 16 can have any suitable design. In some embodiments, the brewing vessel 16 is in the form of a portafilter which is mountable in, and detachable from, the remainder of the beverage brewing apparatus 10.

The raw material 12 may be a granular material. In some embodiments, the raw material 12 comprises ground coffee, tea or cocoa. Particular mention is made of the raw material 12 being ground coffee, and the liquid 14 being water.

The raw material may be added to the brewing vessel 16 in various ways. In some embodiments, the beverage brewing assembly 10 comprises a raw material dispensing assembly (not visible) for delivering the raw material 12 into the brewing vessel 16.

The raw material dispensing assembly may be arranged to receive raw material 12 in the form of granular material, e.g. ground coffee, from a grinding assembly (not visible) included in the raw material dispensing assembly.

The brewing vessel 16 can alternatively or additionally be arranged to receive the raw material 12, e.g. ground coffee, in a pre-portioned form, such as in a capsule, pod, pad or the like.

More generally, the beverage brewing apparatus 10 comprises a fluid displacement assembly 18 for displacing the liquid 14 to the brewing vessel 16 containing the raw material 12. An extraction process can take place when the liquid 14 is combined with the raw material 12 in the brewing vessel 16.

The fluid displacement assembly 18 can have any suitable design provided that the fluid displacement assembly 18 is capable of delivering the liquid 14 to the brewing vessel 16. The fluid displacement assembly 18 can have a pump 20 actuatable to deliver the liquid 14 to the brewing vessel 16.

In some embodiments, the fluid displacement assembly 18, e.g. the pump 20 thereof, comprises a pumping mechanism that includes a pumping member, e.g. a piston member or diaphragm, and a solenoid energizable to cause displacement of the pumping member. In such embodiments, operating the fluid displacement assembly 18 may comprise receiving an electrical signal from a power supply and driving the solenoid, using the electrical signal, to cause displacement of the pumping member. To this end, the pumping member may include a magnetic material, e.g. a ferromagnetic material.

The electrical signal may be an AC voltage signal, e.g. an AC voltage signal provided by a mains power supply. The pumping mechanism's actuation pattern may thus be at least partly defined by current waves provided by the power supply.

In embodiments in which the electrical signal is an AC voltage signal provided by a mains power supply, the frequency of the AC voltage signal can be between 40 and 70 Hz, for example about 50 Hz or about 60 Hz. In the case of a 50 Hz AC voltage signal, a single cycle of the pumping mechanism may be 0.02 seconds.

Such a pumping mechanism can be controlled by phase cutting, which can be regarded as operating the pumping mechanism at a lower power. So-called multi cycle control of the pumping mechanism can be employed, as described in more detail herein below. The pumping mechanism can also be operated at full power, continuously using the full electrical signal received from the power supply.

In some embodiments, the beverage brewing apparatus 10 comprises a reservoir 21 for storing the liquid 14, and the fluid displacement assembly 18 is arranged to deliver the liquid 14 from the reservoir 21 to the brewing vessel 16.

In some embodiments, such as shown in FIG. 1, the liquid 14 is delivered to the brewing vessel 16 containing the raw material 12 subject to a pressure of the liquid 14 reaching or exceeding a given pressure threshold. Thus, the liquid 14 can only enter the brewing vessel 16 when the pressure of the liquid 14 is at or exceeds the given pressure threshold. This pressure requirement can facilitate extraction.

In some embodiments, the beverage brewing apparatus 10, e.g. the fluid displacement assembly 18 thereof, comprises a valve assembly 22, 24, 26 configured so that the liquid 14 can only enter the brewing vessel 16 when the pressure of the liquid 14 is at or exceeds the given pressure threshold.

The valve assembly 22, 24, 26 can have any suitable design. In some embodiments, such as shown in FIG. 1, the valve assembly 22, 24, 26 comprises an electronic valve 22, a check valve 24, and an honest valve 26 that defines the given pressure threshold.

This valve assembly 22, 24, 26 can close a hydraulic system of the beverage brewing apparatus 10 while the pressure inside the hydraulic system remains below the given pressure threshold, e.g. about 4 bar, such that there is no outflow from the hydraulic system to the outside.

In some embodiments, such as shown in FIG. 1, the beverage brewing apparatus 10, e.g. the fluid displacement assembly 18 thereof, comprises a piston 28 for compressing the raw material 12 received in the brewing vessel 16.

In such embodiments, the piston 28 may compress, in other words tamp, the raw material 12, e.g. the granular material, received in the brewing vessel 16.

Thus, a compressed mass of raw material 12 is provided, through which compressed mass of raw material 12 the liquid 14, such as water, can be passed to prepare the beverage.

In some embodiments, the piston 28 can be urged against the raw material 12 and the liquid 14 received in the brewing vessel 16. In such embodiments, the piston 28 can be used to press the liquid 14 through the raw material 12.

The piston 28 can be urged against the raw material 12, e.g. against the raw material 12 and the liquid 14, received in the brewing vessel 16 in any suitable manner, for example using a hydraulic, pneumatic and/or motorized system.

In some embodiments, such as shown in FIG. 1, the piston 28 is urged against the raw material 12, e.g. against the raw material 12 and the liquid 14, received in the brewing vessel 16 by fluid, e.g. the liquid 14, in the hydraulic circuit.

In embodiments in which the valve assembly 22, 24, 26 and the piston 28 are included in the beverage brewing apparatus 10, e.g. in the fluid displacement assembly 18 thereof, the piston 28 may be urged against the raw material 12, e.g. against the raw material 12 and the liquid 14, received in the brewing vessel 16 by the liquid 14 in the hydraulic circuit, while the liquid 14 is below the given pressure threshold.

In some embodiments, and irrespective of how the piston 28 is urged against the raw material 12, the beverage brewing apparatus 10 may include a resilient element 30 arranged to assist retraction of the piston 28, away from the raw material 12 in the brewing vessel 16. This retraction may be implemented after the raw material 12 has been compressed and/or the beverage has been brewed.

More generally, outflow of the beverage from the brewing vessel 16 may be controlled, at least in part, by dimensions of an orifice 32 through which the beverage exits the brewing vessel 16. Alternatively or additionally, outflow from the brewing vessel may be blocked during part of brewing of the beverage, e.g. by an outflow restriction valve (not visible).

The beverage that outflows from the brewing vessel 16 may be received in a drinking or serving vessel 34, e.g. a cup or carafe.

In some embodiments, such as shown in FIG. 1, the beverage brewing apparatus 10, e.g. the fluid displacement assembly 18 thereof, comprises a positioning system 36 for enabling the brewing vessel 16 and the fluid displacement assembly 18 to be arranged relative to each other to permit the liquid 14 to be received in the brewing vessel 16, and/or for enabling the brewing vessel 16 and the raw material dispensing assembly to be arranged relative to each other to enable the raw material 12 to be delivered into the brewing vessel 16.

In some embodiments, the brewing vessel 16 is moveable between a filling position at which the raw material 12 is dispensable by the raw material dispensing assembly into the brewing vessel 16, and a brewing position in which the liquid 14 is receivable into the brewing vessel 16 containing the thus dispensed raw material 12.

In such embodiments, the brewing vessel 16 may be releasably lockable in the fill position, but with the positioning system 36 comprising a release mechanism, e.g. a release mechanism actuatable by the fluid, e.g. the liquid 14, displaced by the fluid displacement assembly 18 to release the brewing vessel 16, and thus allow the brewing vessel 16 to move to the brewing position.

More generally, and still referring to FIG. 1, the beverage brewing apparatus 10, e.g. the fluid displacement assembly 18 thereof, may comprise a heater 38, e.g. a heater 38 in the form of a thermoblock, for heating the liquid 14.

In such embodiments, the fluid displacement assembly 18, e.g. the pump 20 thereof, may be arranged to displace the liquid 14 to the heater 38, so as to enable the heater 38 to heat the liquid 14 as it passes towards the brewing vessel 16.

By controlling a temperature setting of the heater 38 and/or a rate at which the liquid 14 passes through the heater 38, a temperature of the liquid 14 delivered into the brewing vessel 16 can be controlled. Beverage recipes can vary in terms of the temperature of the liquid 14, e.g. water, delivered into the brewing vessel 16. For example, so-called "brew over ice" coffee recipes tend to utilize lower temperature water than more conventional hot coffee recipes.

Such a lower temperature of the liquid 14 can risk compromising raw material extraction, particularly when relatively high flow rates of the liquid 14 through the brewing vessel 16 are used. For example, when brewing coffee using water at a temperature below 90°C, the raw material extraction can be suboptimal when relatively high flow rates are employed. Extraction can nonetheless be improved by slowing down the brewing process. This extends the contact time during which the liquid 14 is in contact with the raw material 12, giving more time for solids to be extracted.

The present disclosure partly relates to a system 50 for controlling the fluid displacement assembly 18, with the system 50 comprising a controller 52 configured to obtain a wetting volume of the liquid 14 to be delivered to the brewing vessel 16 containing the raw material 12. The wetting volume is obtained at least partly based on an amount of the raw material 12 from which the beverage is to be prepared.

The controller 52 controls the fluid displacement assembly 18, e.g. at least the pump 20 thereof, to operate in a first mode to deliver the wetting volume of the liquid 14 to the brewing vessel 16 containing the raw material 12. Operation of the fluid displacement assembly 18 in the first mode can at least partially fill the brewing vessel 16 with the wetting volume of the liquid 14. Delivery of the wetting volume of the liquid 14 to the brewing vessel 16 can accordingly be regarded as a filling phase.

Delivery of the wetting volume of the liquid 14 into the brewing vessel 16 containing the raw material 12 can provide a (pre-)wetting function that facilitates extraction. Moreover, by the wetting volume being based, at least in part, on the amount of raw material 12 from which the beverage is to be prepared, the raw material 12 can be appropriately wetted. In some embodiments, this (pre-)wetting means, in the case of coffee brewing, that there are coffee solids extracted from the ground coffee before there is any brewed coffee falling into the drinking or serving vessel 34. This may generally enhance the so-called dry matter amount, DMA, percentage in the beverage.

In some embodiments, outflow from the brewing vessel 16 is blocked, e.g. by the outflow restriction valve, at least when the fluid displacement assembly 18 is being operated in the first mode. Thus, the wetting volume of the liquid 14 can be retained in the brewing vessel 16 until the fluid displacement assembly 18 is operated in a subsequent mode.

It is noted that the pressure in the brewing vessel 16 may or may not be influenced by a valve, e.g. the outflow restriction valve, downstream of the brewing vessel 16. Such a valve may not influence the dripping flow of the beverage. Rather, such a valve downstream of the brewing vessel 16 may only influence the volume and pressure needed to set dripping of the beverage in motion.

In other embodiments in which the orifice 32 is always open, the wetting volume of the liquid 14 to the brewing vessel 16 containing the raw material 12 can be selected, e.g. minimized, so that there is no, or at least substantially no, outflow via the orifice 32 during operation of the fluid displacement assembly 18 in the first mode.

The controller 52 controls the fluid displacement assembly 18, e.g. at least the pump 20 thereof, to switch from operating in the first mode to operating in a second mode, subject to the wetting volume of the liquid 14 having been delivered to the brewing vessel 16 by operation of the fluid displacement assembly 18 in the first mode. Fluid is displaced by the fluid displacement assembly 18 being operated in the second mode but at a lower flow rate compared to when the fluid displacement assembly 18 is operated in the first mode.

The lower flow rate may, for example, be at least 10% lower, preferably at least 50% lower, compared to when the fluid displacement assembly 18 is operated in the first mode.

The fluid displacement assembly 18 accordingly delivers the wetting volume of the liquid 14 to the brewing vessel 16 containing the raw material 12 at a higher flow rate when operating in the first mode, compared to the lower flow rate at which fluid is displaced by the fluid displacement assembly 18 in the second mode. This can provide relatively efficient (pre-)wetting of the raw material 12.

By lowering the flow rate at which fluid is displaced by the fluid displacement assembly 18 in the second mode, a more controlled, prolonged extraction can take place after delivery of the wetting volume of the liquid 14. In the context of coffee brewing, this can be regarded as a blooming phase.

It is noted that determination of when the wetting volume of the liquid 14 has been delivered to the brewing vessel 16 containing the raw material 12 can be implemented in any suitable manner. In some embodiments, such as shown in FIG. 1, the controller 52 is configured to receive data from a flow meter 53, and switch from operating the fluid displacement assembly 18 in the first mode to the second mode subject, e.g. in response, to the data from the flow meter 53 being indicative of the wetting volume of the liquid 14 having been delivered to the brewing vessel 16.

The fluid displacement assembly's 18 operation in the second mode can assist effective extraction, even when the temperature of the liquid 14 is lower than that used in conventional hot coffee recipes.

In some embodiments, the controller 52 is configured to control the heater 38 so that the temperature of the liquid 14 being delivered to the brewing vessel 16 is less than 95°C, for example less than 90°C, such as less than 75°C.

In some embodiments, an additional volume of the liquid 14 is displaced, at the lower flow rate, by the fluid displacement assembly 18 into the brewing vessel 16 by the fluid displacement assembly 18 being operated in the second mode. By the additional volume of the liquid 14 being delivered to the brewing vessel 16 containing the raw material 12 at the lower flow rate, a more controlled, prolonged extraction can take place using the additional volume of the liquid 14.

For example, delivery of the additional volume of the liquid 14 may push brewed beverage out of the brewing vessel 16, e.g. via the orifice 32. Controlled delivery of the additional volume of the liquid 14 at the lower flow rate may create a dripping flow of the beverage out of the brewing vessel 16.

Alternatively or in addition to the additional volume of the liquid 14 being displaced into the brewing vessel 16, operation of the fluid displacement assembly 18 in the second mode can cause the fluid, e.g. the liquid 14, displaced at the lower flow rate, to urge the piston 28 against the raw material 12 and the liquid 14 received in the brewing vessel 16. By the piston 28 being urged in this manner by the fluid displaced at the lower flow rate, pressure on the raw material 12 and the liquid 14 received in the brewing vessel 16 can be exerted in a more measured manner, thereby assisting to achieve a relatively controlled, prolonged extraction.

In embodiments in which the liquid 14 is delivered to the brewing vessel 16 containing the raw material 12 subject to a pressure of the liquid 14 reaching or exceeding the given pressure threshold, the controller 52 operating the fluid displacement assembly 18 in the second mode may comprise controlling the fluid displacement assembly 18 to displace the liquid 14 to urge the piston 28 against the raw material 12 and the liquid 14 received in the brewing vessel 16. In such embodiments, the pressure of the liquid 14 being displaced by the fluid displacement assembly 18 may be below the given pressure threshold.

In non-limiting examples in which no additional liquid is delivered to the brewing vessel 16 by operation of the fluid displacement assembly 18 in the second mode, the wetting volume of the liquid 14 delivered into the brewing vessel 16 by operation of the fluid displacement assembly 18 in the first mode may, for instance, correspond to the overall volume of the liquid 14 used to brew the beverage.

In other non-limiting examples, the additional volume of the liquid 14 may be delivered to the brewing vessel 16 by operation of the fluid displacement assembly 18 in the second mode, as well as the piston 28 being urged, by the fluid displaced at the lower flow rate, against the raw material 12 and the liquid 14 received in the brewing vessel 16.

The wetting volume can be obtained in any suitable manner. In some embodiments, an indication of the amount of the raw material 12 is received via a user interface 54, e.g. a user interface 54 included in the system 50, and the wetting volume of liquid 14 is determined by the controller 52, e.g. via calculation or use of a look-up table, based on the amount of the raw material 12 as indicated by the indication received from the user interface 54.

In some embodiments, the wetting volume of the liquid 14, in milliliters, is equal to the sum of a first value and a second value, the first value being equal to a mass of the raw material 12 from which the beverage is to be prepared, in grams, multiplied by a coefficient, and wherein the coefficient is between 0.1 and 0.75, and the second value is 0; or wherein the coefficient is between 0.1 and 0.25 and the second value is between 10 and 50.

The coefficient may be between 0.1 and 0.75, with the second value being 0, when the additional volume of the liquid 14 is delivered into the brewing vessel 16 by the fluid displacement assembly 18 being operated in the second mode. This has been found to provide particularly effective pre-wetting of the raw material 12, prior to the additional volume of liquid 14 being delivered to the brewing vessel 16.

In some embodiments, the coefficient is between 0.25 and 0.75, for example about 0.6, with the second value being 0. In other embodiments, the coefficient is between 0.1 and 0.25, for example about 0.15, with the second value being 0.

The coefficient may be between 0.1 and 0.25, for example about 0.15, with the second value being between 10 and 50, e.g. about 21, in embodiments in which the fluid displaced by the fluid displacement assembly 18 operating in the second mode urges the piston 28 against the raw material 12 and the liquid 14 received in the brewing vessel 16.

The switching from operation in the first mode to operation in the second mode can be implemented in any suitable manner. In some embodiments, the controller 52 is configured to control the fluid displacement assembly 18 to switch from operating in the first mode to operating in the second mode using a control sequence that comprises interrupting a pumping operation of the fluid displacement assembly 18 following delivery of the wetting volume of the liquid 14 to the brewing vessel 16.

Such an interruption of the pumping operation may signal the end of the first mode, upon completion of the delivery of the wetting volume of the liquid 14 to the brewing vessel 16.

In some embodiments, the fluid displacement assembly 18 is controlled by the controller 52 to implement a continuous and/or maximum power pumping operation, when operating in the first mode, to deliver the wetting volume of the liquid 14 into the brewing vessel 16. In such embodiments, the continuous and/or maximum power pumping operation may be interrupted upon completion of the delivery of the wetting volume of the liquid 14 to the brewing vessel 16.

In some embodiments, the controller 52 is configured to operate the fluid displacement assembly 18 in the second mode by intermittently actuating the pump 20 included in the fluid displacement assembly 18.

Such intermittent actuation of the pump 20 can assist to provide the lower flow rate of fluid displacement during operation in the second mode compared to during operation in the first mode.

In embodiments in which the fluid displacement assembly 18 comprises the pumping mechanism that includes the pumping member and the solenoid, the controller 52 may be configured to adjust the electrical signal used to drive the solenoid to provide the lower flow rate of fluid displacement during operation in the second mode compared to during operation in the first mode.

In some embodiments, the controller 52 is configured to operate the fluid displacement assembly 18 in the second mode by applying multi cycle control to the electrical signal so that the pumping mechanism is intermittently actuated.

Multi cycle control may comprise driving the solenoid in only a fraction of cycles of the electrical signal, e.g. the AC voltage signal of the power supply.

In some embodiments, the multi cycle control can comprise actuating the solenoid for at least 1 wave, and no more than 5 consecutive waves, of the electrical signal, followed by a pause lasting at least 10 cycles, and no more than 50 cycles.

This may create a very slow outflow of the beverage, e.g. below 1 mL/s, from the brewing vessel 16.

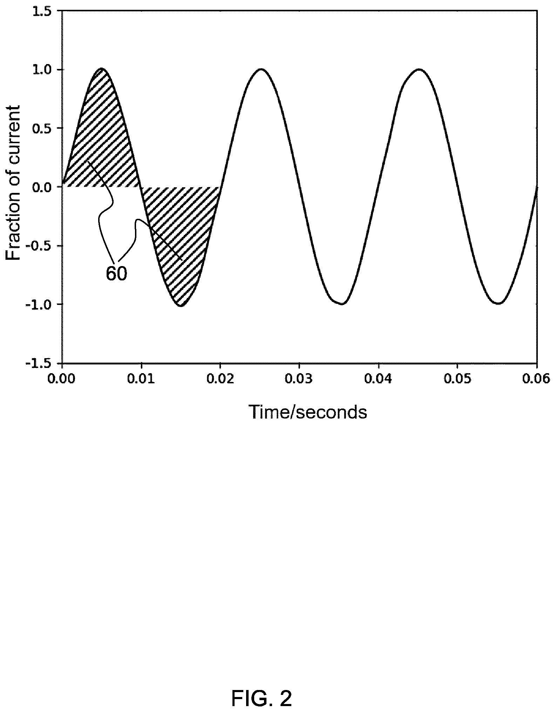

For example, and referring to FIG. 2, the solenoid may be actuated for one cycle 60 of the AC voltage signal, after which multiple cycles are skipped.

The frequency at which this happens can be between 2 Hz and 0.5 Hz. In other words, 2 taps per second or 1 tap every 2 seconds may be the boundaries. With every tap, a fraction of the additional volume of the liquid 14 may be added to the brewing vessel 16. This tapping may assist to ensure a continuous dripping flow of the beverage.

In some embodiments, the controller 52 is configured to control the fluid displacement assembly 18 to operate in the second mode for 5 to 400 seconds, preferably for 5 to 180 seconds. This duration of operation in the second mode has been found to provide effective extraction, particularly when the temperature of the liquid is less than 95°C, for example less than 90°C, such as less than 75°C.

For example, the controller 52 may be configured to operate the fluid displacement assembly 18 in the second mode by applying the multi cycle control to the electrical signal for at least 5 seconds and at most 180 seconds. The above-mentioned dripping phase may accordingly last for at least 5 seconds and at most 180 seconds.

In some embodiments, the controller 52 is configured to control the fluid displacement assembly 18 to switch from operating in the second mode to operating in a third mode, with operation of the fluid displacement assembly 18 in the third mode comprising delivery of the liquid 14 to the brewing vessel 16 containing the raw material 12 at a higher flow rate compared to the flow rate at which fluid is displaced by operation of the fluid displacement assembly 18 in the second mode. Operation of the fluid displacement assembly 18 in the third mode can be regarded as a dispensing phase.

Operation of the fluid displacement assembly 18 in the third mode can add to the liquid 14 already delivered to the brewing vessel 16, e.g. the wetting volume only or the wetting volume and the additional volume of the liquid 14 delivered during operation of the fluid displacement assembly 18 in the second mode, so that an overall volume of the beverage can be realized.

It is noted that the dispensing phase can be omitted when the overall volume has already been reached by operation of the fluid displacement assembly 18 in the first mode, or by operation of the fluid displacement assembly 18 in the first mode and the second mode (when the additional volume of the liquid 14 is delivered to the brewing vessel 16 during operation in the second mode).

Outflow of the brewed beverage from the brewing vessel 16 may, for example, be permitted when the fluid displacement assembly 18 is being operated in the third mode.

In some embodiments, the fluid displacement assembly 18 operating in the third mode delivers the liquid 14 to the brewing vessel 16 at the same flow rate as when the fluid displacement assembly 18 is being operated in the first mode.

The controller 52 can be implemented in numerous ways, with software and/or hardware, to perform the various functions required. A processor is one example of a controller 52 which employs one or more microprocessors that may be programmed using software (e.g., microcode) to perform the required functions. A controller 52 may however be implemented with or without employing a processor, and also may be implemented as a combination of dedicated hardware to perform some functions and a processor (e.g. one or more programmed microprocessors and associated circuitry) to perform other functions.

Examples of controller 52 components that may be employed in various embodiments of the present disclosure include, but are not limited to, conventional microprocessors, application specific integrated circuits (ASICs), and field-programmable gate arrays (FPGAs).

In various implementations, a processor or the controller 52 may be associated with one or more storage media such as volatile and non-volatile computer memory such as RAM, PROM, EPROM, and EEPROM. The storage media may be encoded with one or more programs that, when executed on one or more processors and/or the controller 52, perform the required functions. Various storage media may be fixed within a processor or the controller 52 or may be transportable, such that the one or more programs stored thereon can be loaded into a processor or the controller 52.

In some embodiments, the system 50 is included in the beverage brewing apparatus 10. For example, the beverage brewing apparatus 10 is in the form of a beverage machine, and the system 50 is included in the beverage machine.

In other embodiments, the system 50 is included, at least in part, in a user device, such as a smartphone or tablet computer.

In such embodiments, at least part of the controller 52 may be included in processor(s) included in the user device, and at least part of the user interface 54 (if present) may be included in a user device interface, e.g. a touchscreen, included in the user device.

In some embodiments, the controller 52 is included, at least in part, in a cloud-based server, for example while part of the system is included in a user device in communication with the cloud-based server.

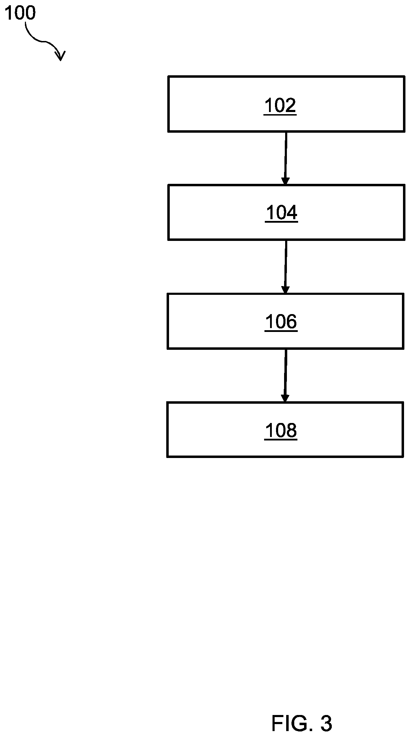

FIG. 3 provides a flowchart of a method 100 for controlling the fluid displacement assembly 18 of the beverage brewing apparatus 10, e.g. for controlling the fluid displacement assembly 18 of the beverage brewing apparatus 10 according to any of the embodiments described herein.

The method 100 comprises obtaining 102 a wetting volume of the liquid 14 to be delivered to the brewing vessel 16 containing the raw material 12, with the wetting volume being obtained at least partly based on an amount of the raw material 12 from which the beverage is to be prepared. The method further comprises controlling 104 the fluid displacement assembly 18 to operate in the first mode to deliver the wetting volume of the liquid 14 to the brewing vessel 16 containing the raw material 12, and controlling 106 the fluid displacement assembly 18 to switch from operating in the first mode to operating in the second mode, subject to the wetting volume of the liquid 14 having been delivered to the brewing vessel 16 by operation of the fluid displacement assembly 18 in the first mode. Fluid is displaced by the fluid displacement assembly 18 being operated in the second mode but at a lower flow rate compared to when the fluid displacement assembly 18 is operated in the first mode, as previously described.

In some embodiments, such as shown in FIG. 3, the method 100 also comprises controlling 108 the fluid displacement assembly 18 to switch from operating in the second mode to operating in the third mode, with operation of the fluid displacement assembly 18 in the third mode comprising delivery of the liquid 14 to the brewing vessel 16 containing the raw material 12 at a higher flow rate compared to the flow rate at which fluid is displaced by operation of the fluid displacement assembly 18 in the second mode.

The method 100 may be performed by the controller 52 of the system 50 according to any of the embodiments described herein.

Further provided is a computer program comprising computer program code which is configured, when the computer program is run on one or more processors, e.g. the controller 52, to cause the one or more processors, e.g. the controller 52, to implement the method 100 according to any of the embodiments described herein.

The present disclosure accordingly contemplates use of software only, to implement the method 100. Hardware changes, e.g. changes to the physical design of the fluid displacement assembly 18, may therefore not be required.

### Example 1

In this non-limiting illustrative example, the raw material 12 is ground coffee and the liquid 14 is water. In a filling phase, implemented by operation of the fluid displacement assembly 18 in the first mode, the wetting volume of water is initially delivered into the brewing vessel 16. The wetting volume, in milliliters, is equal to the mass of the ground coffee, in grams, multiplied by a coefficient between 0.1 and 0.25. The temperature of the water is lower than 95°C. At the end of this filling phase, there is no outflow of coffee from the brewing vessel 16.

In a blooming phase, implemented by operation of the fluid displacement assembly 18 in the second mode, multi cycle control of the pumping mechanism is used, and this lasts for at least 5 seconds. During this blooming phase, water is pumped, at the lower flow rate, into the brewing vessel 16, but there is still no outflow of coffee from the brewing vessel 16.

In a subsequent dispensing phase, there is outflow of coffee from the brewing vessel 16. Optionally, the fluid displacement assembly 18 is operated in the third mode, for example by the pumping mechanism being actuated, to pump further water into the brewing vessel 16, and there is outflow of coffee from the brewing vessel 16.

### Example 2

In this non-limiting illustrative example, the raw material 12 is ground coffee and the liquid 14 is water. In a filling phase, implemented by operation of the fluid displacement assembly 18 in the first mode, the wetting volume of water is initially delivered into the brewing vessel 16. The wetting volume, in milliliters, is equal to the mass of the ground coffee, in grams, multiplied by a coefficient between 0.25 and 0.75, preferably about 0.6.

The wetting volume can, for example, be between 5 to 15 milliliters.

During this operation in the first mode, the pumping mechanism may be operated at full power.

In a blooming phase, implemented by operation of the fluid displacement assembly 18 in the second mode, multi cycle control of the pumping mechanism is used. This may involve actuating the pumping mechanism for 1 to 5 cycles (0.02 seconds to 0.1 seconds) followed by pausing of the pumping mechanism for 10 to 50 cycles. This can last for between 5 and 400 seconds. During this phase, coffee may drip from the brewing vessel 16.

Turning the pumping mechanism on/off can create a tapping noise. The frequency of this tapping may be 2 Hz to 0.5 Hz, in other words 1 to 2 taps per second.

### Example 3

In this non-limiting illustrative example, the raw material 12 is ground coffee and the liquid 14 is water. In a filling phase, implemented by operation of the fluid displacement assembly 18 in the first mode, the wetting volume of water is initially delivered into the brewing vessel 16. The wetting volume, in milliliters, is equal to 21 + (the mass of the ground coffee, in grams, multiplied by a coefficient between 0.1 and 0.25). For example, the wetting volume, in milliliters, is equal to 21 + (the mass of the ground coffee, in grams, multiplied by 0.15). Here the value of 21 corresponds to the volume required to pressurize the beverage brewing apparatus's 10 hydraulic system. The temperature of the water is lower than 95°C. At the end of this filling phase, there is no outflow of coffee from the brewing vessel 16.

In a blooming and dispensing phase, implemented by operation of the fluid displacement assembly 18 in the second mode, multi cycle control of the pumping mechanism is used, and this lasts for at least 5 seconds. During this blooming phase, water is pumped, at the lower flow rate, so as to urge the piston 28 against the water and ground coffee contained in the brewing vessel 16 while the pressure is below the given threshold pressure, e.g. below 4 bar. This pressing of the mixture of ground coffee and water can assist to improve extraction. In this example, pressurized water only enters the brewing vessel 16 if the given threshold pressure is reached or exceeded.

In an optional subsequent dispensing phase, the fluid displacement assembly 18 may be operated in the third mode to pump further water into the brewing vessel 16 and there is outflow of coffee from the brewing vessel 16 until the overall volume of the beverage is reached. The third mode can, for example, be regarded as a regular pumping mode of the fluid displacement assembly 18, e.g. the pump 20 thereof.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A method (100) for controlling a fluid displacement assembly (18) of a beverage brewing apparatus (10), the beverage brewing apparatus further comprising a brewing vessel (16) for containing raw material (12), the method comprising:
obtaining (102) a wetting volume of liquid (14) to be delivered to the brewing vessel containing the raw material, the wetting volume being obtained at least partly based on an amount of the raw material from which a beverage is to be prepared;
controlling (104) the fluid displacement assembly to operate in a first mode to deliver the wetting volume of the liquid to the brewing vessel containing the raw material; and
controlling (106) the fluid displacement assembly to switch from operating in the first mode to operating in a second mode, subject to the wetting volume of the liquid having been delivered to the brewing vessel by operation of the fluid displacement assembly in the first mode, wherein fluid is displaced by the fluid displacement assembly being operated in the second mode but at a lower flow rate compared to when the fluid displacement assembly is operated in the first mode.

2. The method (100) according to claim 1, wherein an additional volume of the liquid (14) is displaced, at the lower flow rate, by the fluid displacement assembly (18) into the brewing vessel (16) by the fluid displacement assembly being operated in the second mode.

3. The method (100) according to claim 1 or claim 2, wherein the fluid displaced, at the lower flow rate, by the fluid displacement assembly (18) operating in the second mode, urges a piston (28) against the raw material (12) and the liquid (14) received in the brewing vessel (16).

4. The method (100) according to any one of claims 1 to 3, wherein the wetting volume of the liquid (14), in milliliters, is equal to the sum of a first value and a second value, the first value being equal to a mass of the raw material (12) from which the beverage is to be prepared, in grams, multiplied by a coefficient, and wherein the coefficient is between 0.1 and 0.75, and the second value is 0; or wherein the coefficient is between 0.1 and 0.25 and the second value is between 10 and 50.

5. The method (100) according to any one of claims 1 to 4, wherein the controlling the fluid displacement assembly (18) to switch from operating in the first mode to operating in the second mode comprises interrupting a pumping operation of the fluid displacement assembly following delivery of the wetting volume of the liquid (14) to the brewing vessel (16).

6. The method (100) according to any one of claims 1 to 5, wherein the operation of the fluid displacement assembly (18) in the second mode comprises intermittently actuating a pump (20) included in the fluid displacement assembly.

7. The method (100) according to any one of claims 1 to 6, wherein the fluid displacement assembly (18) comprises a pumping mechanism that includes a pumping member and a solenoid energizable to cause displacement of the pumping member, wherein operating the fluid displacement assembly comprises receiving an electrical signal from a power supply and driving the solenoid, using the electrical signal, to cause displacement of the pumping member.

8. The method (100) according to claim 7, wherein the operation of the fluid displacement assembly (18) in the second mode comprises applying multi cycle control to the electrical signal so that the pumping mechanism is intermittently actuated.

9. The method (100) according to any one of claims 1 to 8, wherein the fluid displacement assembly (18) is operated in the second mode for 5 to 400 seconds, preferably for 5 to 180 seconds.

10. The method (100) according to any one of claims 1 to 9, comprising controlling (108) the fluid displacement assembly (18) to switch from operating in the second mode to operating in a third mode, wherein operation of the fluid displacement assembly in the third mode comprises delivery of the liquid (14) to the brewing vessel (16) containing the raw material (12) at a higher flow rate compared to the flow rate at which fluid is displaced by operation of the fluid displacement assembly in the second mode.

11. The method (100) according to any one of claims 1 to 10, wherein the liquid (14) is delivered to the brewing vessel (16) containing the raw material (12) subject to a pressure of the liquid reaching or exceeding a given pressure threshold; optionally wherein the given pressure threshold is in the range of 3.5 to 6 bar.

12. The method (100) according to any one of claims 1 to 11, wherein a temperature of the liquid (14) being delivered to the brewing vessel (16) is less than 95°C, preferably less than 90°C, most preferably less than 75°C.

13. A computer program comprising computer program code which is configured, when the computer program is run on one or more processors, to cause the one or more processors to implement the method (100) of any one of claims 1 to 12.

14. A system (50) for controlling a fluid displacement assembly (18) of a beverage brewing apparatus (10), the beverage brewing apparatus having a brewing vessel (16) for containing raw material (12), the system comprising a controller (52) configured to:
obtain a wetting volume of liquid (14) to be delivered to the brewing vessel containing the raw material, the wetting volume being obtained at least partly based on an amount of the raw material from which a beverage is to be prepared;
control the fluid displacement assembly to operate in a first mode to deliver the wetting volume of the liquid to the brewing vessel containing the raw material; and
control the fluid displacement assembly to switch from operating in the first mode to operating in a second mode, subject to the wetting volume of the liquid having been delivered to the brewing vessel by operation of the fluid displacement assembly in the first mode, wherein fluid is displaced by the fluid displacement assembly being operated in the second mode but at a lower flow rate compared to when the fluid displacement assembly is operated in the first mode.

15. A beverage brewing apparatus (10) comprising:
a brewing vessel (16) for containing raw material (12);
a fluid displacement assembly (18) for delivering liquid into the brewing vessel containing the raw material; and
the system (50) according to claim 14.
